# EUROPÄISCHE PATENTSCHRIFT

(11) **EP 3 338 351 B1**
(45) Veröffentlichungstag und Bekanntmachung des Hinweises auf die Patenterteilung: **23.02.2022**
(21) Anmeldenummer: 16734582.6
(22) Anmeldetag: 17.06.2016
(51) Int. Cl.: H02M 1/34, H02M 7/5387

(54) **INVERTERSCHALTUNG MIT EINER SCHALTUNGSANORDNUNG ZUM REGENERATIVEN DÄMPFEN ELEKTRISCHER SCHWINGUNGEN UND VERFAHREN ZUM REGENERATIVEN DÄMPFEN ELEKTRISCHER SCHWINGUNGEN**
INVERTER CIRCUIT COMPRISING A CIRCUIT ARRANGEMENT FOR REGENERATIVE DAMPING OF ELECTRICAL OSCILLATIONS, AND METHOD FOR REGENERATIVE DAMPING OF ELECTRICAL OSCILLATIONS
CIRCUIT ONDULEUR POURVU D'UN DISPOSITIF DE COMMUTATION POUR L'ATTÉNUATION RÉGÉNÉRATIVE D'OSCILLATIONS ÉLECTRIQUES ET PROCÉDÉ POUR L'ATTÉNUATION RÉGÉNÉRATIVE D'OSCILLATIONS ÉLECTRIQUES

(30) Priorität: 20.08.2015 DE 102015215886
(43) Veröffentlichungstag der Anmeldung: 27.06.2018
(73) Patentinhaber: Robert Bosch GmbH, 70442 Stuttgart (DE)
(72) Erfinder: PEUSER, Thomas, 71636 Ludwigsburg (DE); PURCAREA, Calin, 70599 Stuttgart (DE)
(86) Internationale Anmeldenummer: PCT/EP2016/063980
(87) Internationale Veröffentlichungsnummer: WO 2017/028989

(56) Entgegenhaltungen:
- EP-A2- 1 213 826
- DE-A1- 10 020 137
- US-A1- 2013 027 984

## Beschreibung

Die Erfindung betrifft eine Inverterschaltung, bei der die Energie in den elektrischen Schwingungen, die bei Schaltvorgängen entstehen, zum großen Teil wiedergewonnen wird, und sie umfasst auch ein mit dieser Inverterschaltung realisiertes Verfahren zum regenerativen Dämpfen elektrischer Schwingungen.

### Stand der Technik

Inverter, auch Wechselrichter genannt, formen eine von einer Quelle bereit gestellte Gleichspannung in eine Wechselspannung aus rechteckförmigen Impulsen variabler Frequenz um, die dann einer Last zur Verfügung gestellt wird, z.B. zum Betreiben einer elektrischen Maschine, etwa zu Antreiben eines Motor für ein Elektrofahrzeug.

Inverter werden ein- und mehrphasig eingesetzt. Bei einem einphasigen Inverter werden die Ausgänge über Schalter abwechselnd mit dem Plus- und dem Minuspol der Quelle verbunden. Bei einem mehrphasigen Inverter werden die einzelnen Anschlüsse der Last (Phasen) in einer von der Anwendung abhängigen Reihenfolge umgepolt. Beispielsweise kann ein dreiphasiger Inverter dafür eingesetzt werden, drei zu einem Stern zusammengeschaltete Wicklungen eines Motors zyklisch umzupolen.

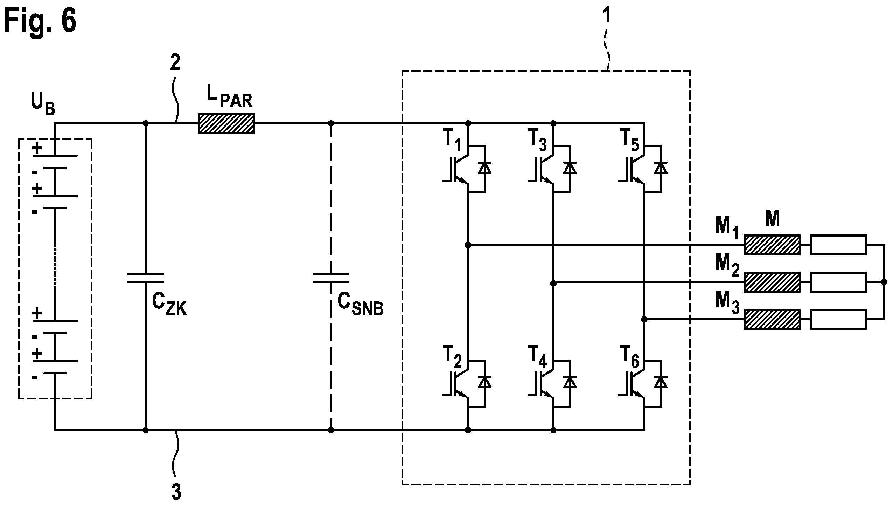

Figur 6 zeigt die grundsätzliche Schaltung eines dreiphasigen Inverters nach dem Stand der Technik. Hier wird die Gleichspannung von einem Akkumulator geliefert und an einem Zwischenkreiskondensator zur Verfügung gestellt. Jede der drei Phasen kann gesondert über jeweils einen Halbleiterschalter mit dem Pluspol oder dem Minuspol der Gleichspannung verbunden werden, wobei als Halbleiterschalter bevorzugt MOSFETS oder IGBTs mit jeweils parallel geschalteten Dioden (Freilaufdioden) zum Einsatz kommen. Dabei werden die beiden Schalter jeder Phase im Gegentakt betrieben, allerdings mit einer gewissen Totzeit beim Umschalten, um Überschneidungen - die ja einen Kurzschluss der Quelle bedeuten würden - sicher zu vermeiden.

Im Moment des Öffnens der Halbleiterschalter machen sich die parasitäre Induktivitäten der Schaltung und hier insbesondere die Induktivitäten der Verbindungsleitungen zwischen der Quelle mit dem Zwischenkreiskondensator und dem Leistungsmodul mit den Halbleiterschaltern störend bemerkbar. Die in diesen parasitären Induktivitäten gespeicherte Energie bewirkt nämlich einen Induktionsspannungsstoß, der zu Überspannungen an den Halbleiterschaltern führt und so das Leistungsmodul gefährdet, und der weiterhin zu elektrischen Schwingungen führt. Um dem zu begegnen stellt der Stand der Technik zwei verschiedene Vorgehensweisen zur Verfügung, die auch kombiniert werden können: Zum einen werden die elektronischen Schalter von vorn herein für die zu erwartenden Überspannungen ausgelegt, indem deren Durchbruchsspannung deutlich über der Zwischenkreisspannung liegt. Zum andern kann ein zusätzlicher Kondensator niederinduktiv an die Halbleiterschalter angeschlossen werden ("kapazitiver Snubber"), wobei "niederinduktiv" bedeutet, dass er unter Minimierung der Zuleitungslängen in das Leistungsmodul integriert sein sollte. Dabei entsteht eine elektrische Schwingung zwischen diesem Kondensator und den parasitären Induktivitäten, die durch die ohmschen Widerstände der Schaltung (in der Figur nicht dargestellt) gedämpft wird und abklingt. In beiden Fällen wird die in den parasitären Induktivitäten gespeicherte magnetische Energie bei jedem Schaltvorgang in Wärme umgewandelt und führt zu Verlusten, die proportional zur Schaltfrequenz ansteigen.

Die EP 1 213 826 A2 zeigt ein Schaltentlastungsnetzwerk für Leistungsschalter, mit einem Schwingkreisstromrichter. Die DE 100 20 137 A1 zeigt eine Schaltung zur Rückspeisung der in einer Stromrichterschaltung anfallenden elektrischen Energie. Die US 2013 / 0 027 984 A1 zeigt einen Transformator.

### Offenbarung der Erfindung

Die Erfindung hat in einem ersten Aspekt eine Inverterschaltung zum abwechselnden Verbinden der Phasen einer mehr-phasigen, insbesondere dreiphasigen Last mit dem positiven und dem negativen Pol einer Gleichspannungsquelle zum Gegenstand, die in ein Leistungsmodul integrierte, parallel zueinander geschaltete Paare von elektronischen Schaltern aufweist, wobei die beiden zu dem jeweiligen Paar gehörenden Schalter in Serie geschaltet sind, und wobei an der Verbindung der beiden, zu dem Paar gehörenden elektronischen Schalter der Anschluss für die jeweilige Phase der Last vorgesehen ist. Weiterhin weist die Inverterschaltung einen Zwischenkreiskondensator auf, der parallel zu der Gleichspannungsquelle geschaltet ist, und er weist elektrische Verbindungen auf, die vom Zwischenkreiskondensator zum Leistungsmodul verlaufen und zum Anschließen der Schalterpaare dienen, wobei diese Verbindungen verteilte parasitäre Induktivitäten aufweisen und dadurch beim Schalten elektrische Schwingungen hervorrufen. Um diese Schwingungen zu dämpfen und die in ihnen enthaltene Energie zurückzugewinnen umfasst die Schaltungsanordnung
- einen Pufferkondensator, der mit seinem ersten Anschluss mit einem Anschluss der Schalterpaare verbunden ist,
- eine erste Diode, über die der Pufferkondensator mit seinem anderen Anschluss mit dem anderen Anschluss der Schalterpaare verbunden ist,
- weitere Dioden, die zwischen dem Knoten zwischen dem Pufferkondensator und der ersten Diode und den "Anschlüssen für die jeweilige Phase der Last in Sperrrichtung angeordnet sind, und
- einen Tiefsetzsteller über den der Pufferkondensator mit dem Zwischenkreiskondensator, verbunden ist.

### Vorteile der Erfindung

Ein Vorteil der Erfindung besteht darin, dass Überspannungen an den elektronischen Schaltern vermieden werden und diese daher nicht hinsichtlich ihrer Spannungsfestigkeit überdimensioniert werden müssen. Außerdem wird die in den parasitären Induktivitäten enthaltene Energie zurückgewonnen und an den Zwischenkreiskondensator bzw. an die Spannungsquelle zurück übertragen. Zumal bei hohen Schaltfrequenzen verringert dies die Verluste und die dafür erforderliche Kühlleistung im Leistungsmodul merklich. Auch EMV-Probleme (Elektromagnetische Verträglichkeit) werden verringert. Die Schaltfrequenz der elektronischen Schalter kann dadurch erhöht werden.

Ausführungsarten der Erfindung bieten weitere Vorteile:
Wenn der Pufferkondensator und die Dioden niederinduktiv an die Schalter angeschlossen sind, werden Schwingungen auf Grund der von parasitären Induktivitäten der Anschlüsse diese Bauelemente verringert. Dies ist besonders effektiv, wenn sie in das Leistungsmodul integriert werden.

Mit einem zusätzlichen Dämpfungskondensator, der parallel zu den Schalterpaaren geschaltet und niederinduktiv an diese angeschlossen ist, kann eine zusätzliche Dämpfung von Schwingungen, insbesondere bei sehr schnell schaltenden Schaltern erreicht werden. Dies ermöglicht vorteilhaft eine weitere Erhöhung der Schaltfrequenz.

Auch der Dämpfungskondensator wird bevorzugt in das Leistungsmodul integriert, um Schwingungen auf Grund von parasitären Induktivitäten in dessen Zuleitungen zu vermeiden.

### Kurze Beschreibung der Zeichnungen

Es zeigen
Figur 1 eine erste Ausführungsart der Erfindung;
Figur 2a Simulationsergebnisse zu einer Schaltung nach dem Stand der Technik (Fig.6);
Figur 2b Simulationsergebnisse für eine Schaltung nach der Erfindung gemäß Figur 1;
Figur 3 eine zweite Ausführungsart der Erfindung mit einem ergänzenden Snubber-Kondensator C_{SNB};
Figur 4a Simulationsergebnisse zu einer Schaltung nach dem Stand der Technik (Figur 6) mit einem ergänzenden Snubber-Kondensator C_{SNB};
Figur 4b Simulationsergebnisse für eine Schaltung nach der Erfindung mit einem ergänzenden Snubber-Kondensator C_{SNB}, gemäß Figur 3;
Figur 5 symbolisch das allgemeine Verfahren zum Rückgewinnen der Energie aus elektrischen Schwingungen;
   und
Figur 6 eine Inverterschaltung nach dem Stand der Technik.

Die Erfindung geht aus von einer z.B. dreiphasigen Inverterschaltung nach Figur 6 zum abwechselnden Verbinden der Phasen einer dreiphasigen Last M mit dem positiven und dem negativen Pol einer Gleichspannungsquelle U_{B}. Die Schaltung weist dafür drei in ein Leistungsmodul 1 integrierte, parallel zueinander geschaltete Paare von elektronischen Schaltern (T₁, T₂; T₃, T₄; T₅, T₆) auf, wobei die beiden zu dem jeweiligen Paar gehörenden Schalter in Serie geschaltet sind. An der jeweiligen Verbindung der beiden, zu dem Paar gehörenden elektronischen Schaltern ist der Anschluss für die jeweilige Phase (M₁, M₂, M₃) der Last M vorgesehen.

Parallel zur Gleichspannungsquelle U_{B} ist ein Zwischenkreiskondensator C_{ZK} geschaltet.

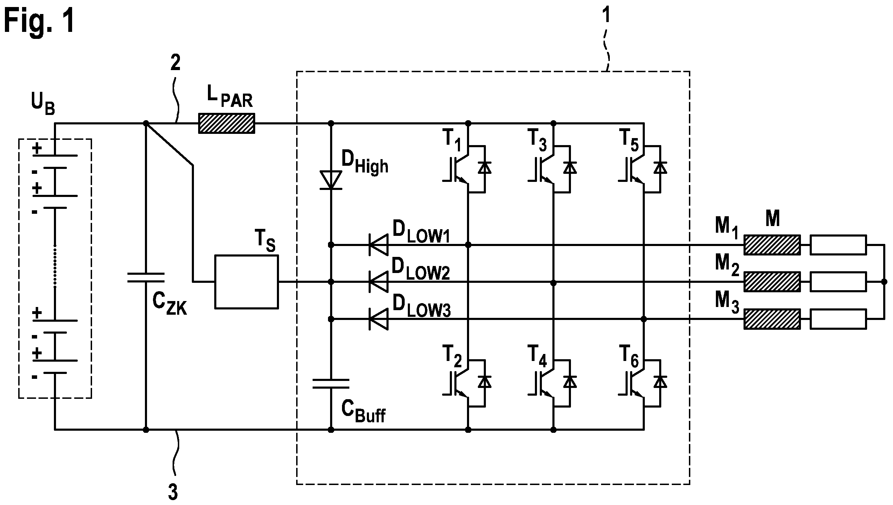

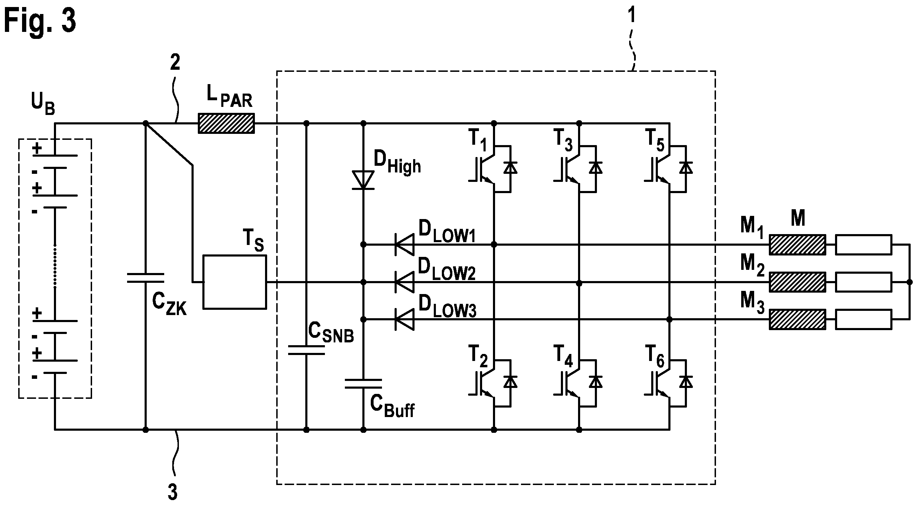

Alle diese Bauelemente gemäß dem Stand der Technik nach Figur 6 weist auch die Inverterschaltung nach der Erfindung gemäß Figur 1 und 3 auf.

Die Schalter werden in der Weise betätigt, dass immer nur höchstens einer der beiden zu einem Schalterpaar gehörenden Schalter geschlossen ist, wodurch die zugehörige Phase der Last entweder mit dem Pluspol oder mit dem Minuspol der Gleichspannungsquelle verbunden ist.

Insbesondere die elektrische Verbindungen 2 und 3 zwischen dem Zwischenkreiskondensator C_{ZK} und dem Leistungsmodul 1 zum Anschließen der Schalterpaare (T₁, T₂; T₃, T₄; T₅, T₆), enthalten verteilte parasitäre Induktivitäten, und diese sind in der Figur 6 symbolisch als ein konzentriertes Schaltelement L_{PAR} dargestellt. Beim Schalten der elektronischen Schalter (T₁, T₂, T₃, T₄, T₅ und T₆) rufen diese Induktivitäten Überspannungen und elektrische Schwingungen hervor. Im Stand der Technik wird dem einerseits dadurch begegnet, dass die Schalter für die zu erwartenden Überspannungen ausgelegt werden, indem deren Durchbruchsspannung deutlich über der Zwischenkreisspannung liegt. Zum andern kann ein zusätzlicher Kondensator C_{SNB} niederinduktiv an den Halbleiter angeschlossen werden ("kapazitiver Snubber"); in Figur 6 ist dieser Kondensator gestrichelt eingezeichnet. Die in der Schwingung enthaltene Energie wird dabei in den unvermeidlichen ohmschen Widerständen der Schaltung (in der Zeichnung nicht dargestellt) in Wärme umgewandelt und muss ggf. abgeführt werden.

Hiervon ausgehend zeigt Figur 1 eine erste Ausführungsart der Erfindung, wobei gleiche Bauteile gleich bezeichnet sind. Im Zentrum der Schaltung steht dabei der Pufferkondensator C_{Buff}, der mit einem seiner Anschlüsse (Figur 1 unten) mit dem einen Anschluss der Schalterpaare (T₁, T₂; T₃, T₄; T₅, T₆) verbunden ist. Der andere Anschluss des Pufferkondensators ist über eine erste Diode D_{High}, mit dem anderen Anschluss der Schalterpaare (T₁, T₂; T₃, T₄; T₅, T₆) verbunden, und über drei weitere Dioden (D_{Low1}, D_{Low2}, D_{Low3}) mit den drei Anschlüssen für die jeweilige Phase (M₁, M₂, M₃) der Last M. Dadurch wird die Spannung an den geöffneten Schaltern auf die Zwischenkreisspannung beschränkt, und die Energie aus den parasitären Induktivitäten L_{PAR} wird in den Pufferkondensator C_{Buff} geleitet und dort zwischengespeichert.

Diese zwischengespeicherte Energie wird anschließend dem Pufferkondensator C_{Buff} entnommen und einem Tiefsetzsteller T_{S} zugeführt. Tiefsetzsteller sind als solche im Stand der Technik bekannt und können hier in jeder Ausführungsart zum Einsatz kommen, z.B. als klassischer Tiefsetzsteller mit aktiven Bauteilen und expliziter Induktivität. Denkbar wäre auch die Energierückführung über aktive Bauteile und parasitäre Induktivitäten in der AVT (Aufbau- und Verbindungstechnik) oder über ein vollständig passives Netzwerk. Wesentlich ist nur, dass die höhere Spannung am Pufferkondensator C_{Buff}, der die Energie aus den parasitären Induktivitäten L_{PAR} aufgenommen hat, heruntergesetzt wird auf die Zwischenkreisspannung, so dass diese Energie an den Zwischenkreiskondensator C_{ZK} und damit an die Quelle U_{B} zurückliefert werden kann. Dadurch werden die durch den Schaltvorgang hervorgerufenen Überspannungen reduziert und es gibt nur noch elektrischen Schwingungen mit stark reduzierter Amplitude.

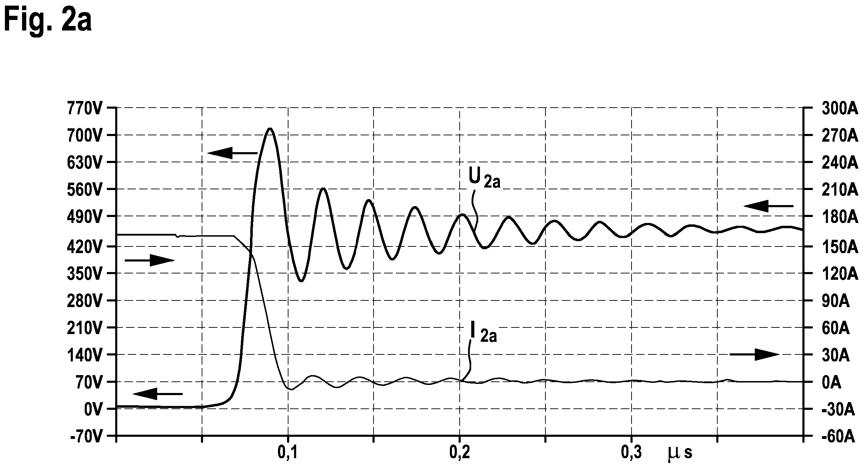

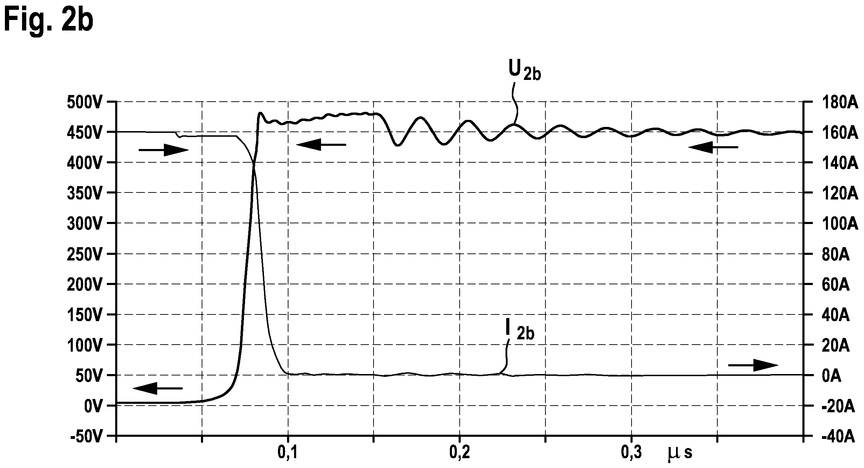

Diese Wirkung der erfindungsgemäßen Schaltung zeigt Figur 2 in Form einer Simulation, wobei Figur 2a die Verhältnisse vor und Figur 2b nach dem Einfügen des Pufferkondensators C_{Buff}, des Tiefsetzstellers T_{S} und der Dioden darstellt. Die Kurven I₂ₐ bzw. I_{2b} zeigen dabei den Strom in den Leitungen 2 und 3, und die Kurven U₁ₐ bzw. U_{1b} zeigen die Spannung am Eingang des Leistungsmoduls. Die Pfeile verweisen dabei auf die jeweils zugehörige Spannungsordinate (links) bzw. Strom-Ordinate (rechts).

Bei der Realisierung der Schaltung nach Figur 1 ist darauf zu achten, dass die parasitären Induktivitäten zwischen dem Pufferkondensator C_{Buff} und den elektronischen Schaltern sehr gering bleiben, da es sonst zwischen diesen Bauteilen zu unerwünschten weiteren Schwingungen kommen kann. Deshalb sollen in einem ersten Schritt die Dioden D_{Low1}, D_{Low2} und D_{Low3} im Leistungsmodul 1 bei den zugehörigen Schalterpaaren integriert werden, d.h. D_{Low1} bei T₁ und T₂, D_{Low2} bei T₃ und T₄ sowie D_{Low3} bei T₅ und T₆, so dass jeweils Teilmodule des Leistungsmoduls 1 gebildet sind. In einem zweiten Integrationsschritt wird auch die Diode D_{Heigh} in das Leistungsmodul 1 integriert und in einem dritten Schritt zusätzlich der Pufferkondensator C_{Buff}.

Hingegen spielen parasitäre Induktivitäten zwischen C_{Buff} und dem Zwischenkreiskondensator C_{ZK} - einschließlich der Schaltung des Tiefsetzstellers - eine untergeordnete Rolle, weil hier nur der (geringe) Strom zum Zurückführen der Schwingungsenergie fließt. Diese Bauteile, und hier insbesondere die Schaltung des Tiefsetzstellers T_{S} kann daher entfernt vom Leistungsmodul 1 angeordnet sein.

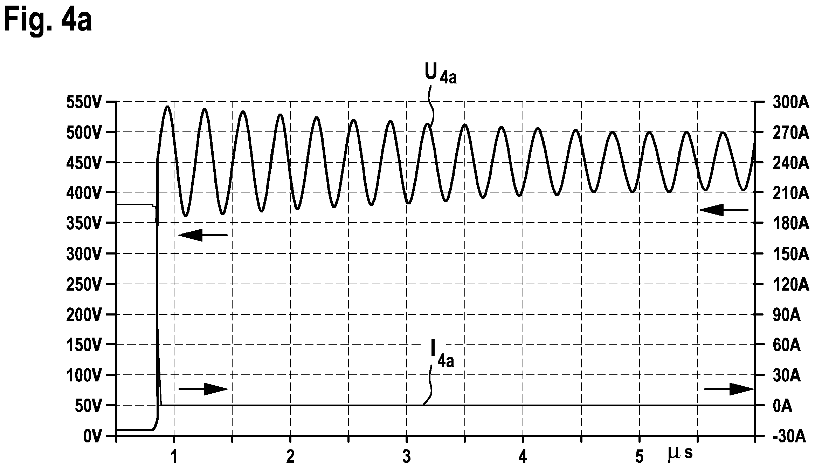

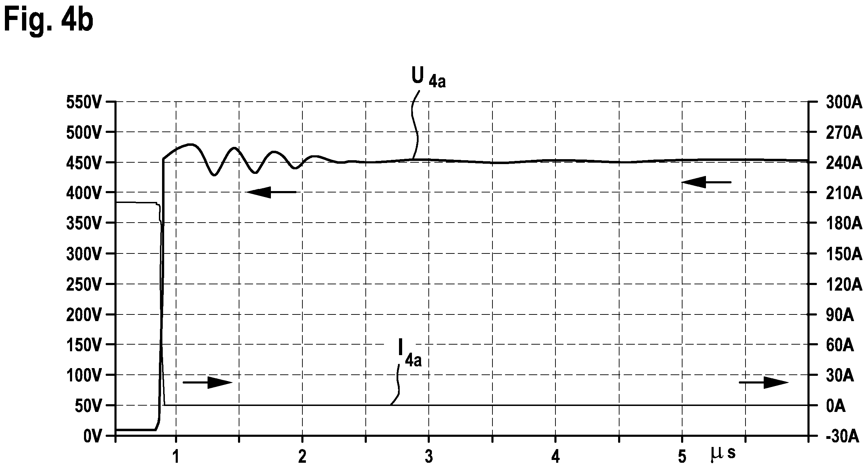

Die Schaltung nach Figur 1 kann ergänzt werden durch einen Snubber-Kondensator C_{SNB}, wie er aus dem Stand der Technik an sich bekannt ist (in Figur 6 gestichelt). Dies führt zu der Ausführungsart der Erfindung gemäß Figur 3. Diese Anordnung ist besonders vorteilhaft bei Anwendungen mit besonders schnell schaltenden Halbleitern. Figur 4 zeigt dazu wieder, ähnlich wie in Figur 2, die Simulationsergebnisse vor und nach dem Einfügen der Schwingungsdämpfung mit Pufferkondensator C_{Buff}, Tiefsetzsteller T_{S} und Dioden.

Den Kurven kann entnommen werden, dass eine ungedämpfte Schwingung (Figur 2a, Kurve U₂ₐ) eine maximale Überspannung von (in diesem Beispiel) mehr als 250 V über der Betriebsspannung von 450 V erreicht, und ein Snubber-Kondensator nach dem Stand der Technik (Figur 4a, Kurve U₄ₐ) kann diese Amplitude auf etwa 100 V senken.

Mit der regenerativen Dämpfung nach der Erfindung kann die Überspannung auf etwa 25 V verringert werden (Figur 2b, Kurve U_{2b}, sowie Figur 4b, Kurve U_{4b}). Dabei zeigt sich, dass bei der Schaltung nach der Erfindung die Frequenz der verbleibenden Schwingung durch den ergänzenden Snubber-Kondensator C_{SNB} von etwa 30 MHz (Figur 2b, Kurve U_{2b}, ohne Snubber-Kondensator) auf etwa 3 MHz (Figur 4b, Kurve U_{4b}, mit Snubber-Kondensator) absinkt. Der an sich bekannte Snubber-Kondensator C_{SNB} hat somit im Zusammenhang mit der Erfindung einen anderen Wirkungsschwerpunkt als im Stand der Technik.

Die Erfindung wurde hier an Hand einer dreiphasigen Last M erläutert. Sie ist aber ohne weiteres auch bei einer mehrpasigen Last, z.B. einer sechs- oder neunphasigen Last M einsetzbar.

Im Falle einer als "einphasig" bezeichneten Last genügt es aber nicht, einen der beiden Anschlüsse der Last abwechselnd mit dem positiven und dem negativen Pol einer Gleichspannungsquelle (U_{B}) zu verbinden. Vielmehr muss dies mit beiden Anschlüssen der Last geschehen, so dass die beiden Anschlusse der Last als Phasen im Sinne des Anspruch 1 zu verstehen sind. Somit kommen in diesem Fall auch zwei Paare von Schaltern usw. zum Einsatz.

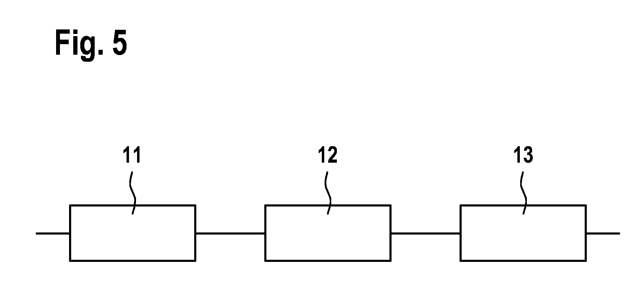

Figur 5 zeigt symbolisch das allgemeine Verfahren zum Rückgewinnen von Energie, die im Magnetfeld der verteilten parasitären Induktivitäten eines Gleichstrom-Stromkreises enthalten ist. Dabei ist vorausgesetzt, dass dieser Gleichstrom-Stromkreis eine Gleichspannungsquelle, einen elektronischen Schalter und eine Last umfasst, die über Leitungen mit parasitären Induktivitäten miteinander verbunden sind, und das Verfahren weist folgende Schritte auf:
- Öffnen (11) des Schalters, wodurch der Stromkreis unterbrochen wird und die in den parasitären Induktivitäten gespeicherte Energie eine Induktionsspannung induziert;
- Zuführen (12) dieser durch das Schalten induzierten Induktionsspannung zu einem Pufferkondensator über eine Diode, die so gepolt ist, dass sie ein nachfolgendes Entladen des Pufferkondensators in den Stromkreis verhindert, und
- Entladen (13) des Pufferkondensators über einen Tiefsetzsteller an die Gleichspannungsquelle.

## Patentansprüche

1. Inverterschaltung zum abwechselnden Verbinden der Phasen einer mehrphasigen Last (M) mit dem positiven und dem negativen Pol einer Gleichspannungsquelle (U_{B}), aufweisend
• in ein Leistungsmodul (1) integrierte, parallel zueinander geschaltete Paare von elektronischen Schaltern (T₁, T₂; T₃, T₄; T₅, T₆; ...), wobei die beiden zu dem jeweiligen Paar gehörenden Schalter in Serie geschaltet sind, und wobei an der Verbindung der beiden, zu dem Paar gehörenden elektronischen Schalter der Anschluss für die jeweilige Phase (M₁, M₂, M₃; ...) der Last (M) vorgesehen ist,
• einen Zwischenkreiskondensator (C_{ZK}), der parallel zu der Gleichspannungsquelle (U_{B}) geschaltet ist, und
• elektrische Verbindungen (2, 3) zwischen dem Zwischenkreiskondensator (C_{ZK}) und dem Leistungsmodul (1) zum Anschließen der Schalterpaare (T₁, T₂; T₃, T₄; T₅, T₆; ...),
wobei die elektrischen Verbindungen (2, 3) verteilte parasitäre Induktivitäten (L_{PAR}) aufweisen und dadurch beim Schalten elektrische Schwingungen hervorrufen;
umfassend eine Schaltungsanordnung zum regenerativen Dämpfen der elektrischen Schwingungen, aufweisend
• einen Pufferkondensator (C_{Buff}), der mit seinem ersten Anschluss mit einem Anschluss der Schalterpaare (T₁, T₂; T₃, T₄; T₅, T₆; ...) verbunden ist,
• eine erste Diode (D_{High}), über die der Pufferkondensator (C_{Buff}) mit dem anderen Anschluss der Schalterpaare (T₁, T₂; T₃, T₄; T₅, T₆; ...) verbunden ist,
• weitere Dioden (D_{Low1}, D_{Low2}, D_{Low3}; ...), die zwischen dem Knoten zwischen dem Pufferkondensator (C_{Buff}) und der ersten Diode und den Anschlüssen für die jeweiligen Phasen (M₁, M₂, M₃) der Last (M) in Sperrrichtung angeordnet sind, und
• einen Tiefsetzsteller (T_{S}), über den der Pufferkondensator (C_{Buff}) mit dem Zwischenkreiskondensator (C_{ZK}), verbunden ist.

2. Inverterschaltung nach Anspruch 1, bei der die Dioden (D_{High} und D_{Low1}, D_{Low2}, D_{Low3}; ...) und der Pufferkondensator (C_{Buff}) niederinduktiv mit dem Schalterpaar (T₁, T₂; T₃, T₄; T₅, T₆; ...) verbunden sind.

3. Inverterschaltung nach Anspruch 2, bei der die weiteren Dioden (D_{Low1}, D_{Low2}, D_{Low3}; ...) im Leistungsmodul (1) bei dem zugehörigen Schalterpaar (T₁, T₂; T₃, T₄; T₅, T₆; ...) integriert sind und mit diesem jeweils ein Teilmodul bilden.

4. Inverterschaltung nach Anspruch 2 oder 3, bei der die Dioden (D_{High} und D_{Low1}, D_{Low2}, D_{Low3}; ...) in das Leistungsmodul (1) integriert sind.

5. Inverterschaltung nach einem der Ansprüche 3 bis 5, bei der die Dioden (D_{High} und D_{Low1,} D_{Low2}, D_{Low3}; ...) und der Pufferkondensator (C_{Buff}) in das Leistungsmodul (1) integriert sind.

6. Inverterschaltung nach einem der Ansprüche 1 bis 5, aufweisend einen Dämpfungskondensator (C_{SNB}), der parallel zu den Schalterpaaren (T₁, T₂; T₃, T₄; T₅, T₆; ...) geschaltet und niederinduktiv an diese angeschlossen ist.

7. Inverterschaltung nach Anspruch 6, bei der der Dämpfungskondensator (C_{SNB}) in das Leistungsmodul (1) integriert ist.

8. Inverterschaltung nach einem der Ansprüche 1 bis 7, bei der die Gleichspannungsquelle (U_{B}) ein Akkumulator für den Antrieb eines Elektrofahrzeugs ist.

9. Inverterschaltung nach einem der Ansprüche 1 bis 8, bei der die Last (M) ein dreiphasiger Elektromotor ist und dessen Wicklungen zu einem Stern zusammengeschaltet sind.

10. Inverterschaltung nach einem der Ansprüche 1 bis8, bei der die Last (M) ein dreiphasiger Elektromotor ist und dessen Wicklungen zu einem Dreieck zusammengeschaltet sind.

## Claims

1. Inverter circuit for alternately connecting the phases of a multi-phase load (M) to the positive and negative pole of a DC voltage source (U_{B}), having
• pairs of electronic switches (T₁, T₂; T₃, T₄; T₅, T₆; ...) which are connected in parallel with one another and are integrated in a power module (1), the two switches belonging to the respective pair being connected in series, and the terminal for the respective phase (M₁, M₂, M₃; ...) of the load (M) being provided at the connection of the two electronic switches belonging to the pair,
• an intermediate circuit capacitor (C_{ZK}) which is connected in parallel with the DC voltage source (U_{B}), and
• electrical connections (2, 3) between the intermediate circuit capacitor (C_{ZK}) and the power module (1) for connecting the pairs of switches (T₁, T₂; T₃, T₄; T₅, T₆; ...),
the electrical connections (2, 3) having distributed parasitic inductances (L_{PAR}) and, as a result, causing electrical oscillations during switching;
comprising a circuit arrangement for regeneratively damping the electrical oscillations, having
• a buffer capacitor (C_{Buff}), the first terminal of which is connected to a terminal of the pairs of switches (T₁, T₂; T₃, T₄; T₅, T₆; ...),
• a first diode (D_{High}), via which the buffer capacitor (C_{Buff}) is connected to the other terminal of the pairs of switches (T₁, T₂; T₃, T₄; T₅, T₆; ...),
• further diodes (D_{Low1}, D_{Low2}, D_{Low3}; ...) that are arranged between the node between the buffer capacitor (C_{Buff}) and the first diode and the terminals for the respective phases (M₁, M₂, M₃) of the load (M) in the blocking direction, and
• a buck converter (T_{S}), via which the buffer capacitor (C_{Buff}) is connected to the intermediate circuit capacitor (C_{ZK}) .

2. Inverter circuit according to Claim 1, in which the diodes (D_{High} and D_{Low1}, D_{Low2}, D_{Low3}; ...) and the buffer capacitor (C_{Buff}) are connected to the pair of switches (T₁, T₂; T₃, T₄; T₅, T₆; ...) in a low-inductance manner.

3. Inverter circuit according to Claim 2, in which the further diodes (D_{Low1}, D_{Low2}, D_{Low3}; ...) in the power module (1) are integrated in the associated pair of switches (T₁, T₂; T₃, T₄; T₅, T₆; ...) and respectively form, with the latter, a partial module.

4. Inverter circuit according to Claim 2 or 3, in which the diodes (D_{High} and D_{Low1}, D_{Low2}, D_{Low3}; ...) are integrated in the power module (1).

5. Inverter circuit according to Claim 2 or 3, in which the diodes (D_{High} and D_{Low1}, D_{Low2}, D_{Low3}; ...) and the buffer capacitor (C_{Buff}) are integrated in the power module (1) .

6. Inverter circuit according to one of Claims 1 to 5, having a damping capacitor (C_{SNB}) which is connected in parallel with the pairs of switches (T₁, T₂; T₃, T₄; T₅, T₆; ...) and is connected to the latter in a low-inductance manner.

7. Inverter circuit according to Claim 6, in which the damping capacitor (C_{SNB}) is integrated in the power module (1) .

8. Inverter circuit according to one of Claims 1 to 7, in which the DC voltage source (U_{B}) is a rechargeable battery for the drive of an electric vehicle.

9. Inverter circuit according to one of Claims 1 to 8, in which the load (M) is a three-phase electric motor and its windings are interconnected in star.

10. Inverter circuit according to one of Claims 1 to 8, in which the load (M) is a three-phase electric motor and its windings are interconnected in delta.

## Revendications

1. Circuit onduleur permettant de relier en alternance les phases d'une charge polyphasée (M) au pôle positif et au pôle négatif d'une source de tension continue (U_{B}), présentant
• des paires de commutateurs électroniques (T₁, T₂ ; T₃, T₄ ; T₅, T₆ ; ...) connectées en parallèle les unes aux autres et intégrées dans un module de puissance (1), les deux commutateurs appartenant à la paire respective étant connectés en série, et la connexion pour la phase respective (M₁, M₂, M₃ ; ...) de la charge (M) étant prévue au niveau de la liaison des deux commutateurs électroniques appartenant à la paire,
• un condensateur de circuit intermédiaire (C_{ZK}) qui est connecté en parallèle à la source de tension continue (U_{B}), et
• des liaisons électriques (2, 3) entre le condensateur de circuit intermédiaire (C_{ZK}) et le module de puissance (1) pour connecter les paires de commutateurs (T₁, T₂ ; T₃, T₄ ; T₅, T₆ ; ...) ,
les liaisons électriques (2, 3) présentant des inductances parasites réparties (L_{PAR}) et provoquant de ce fait des oscillations électriques lors de la commutation ;
comprenant un agencement de circuit pour l'atténuation régénérative des oscillations électriques, présentant
• un condensateur tampon (C_{Buff}) qui est relié par sa première connexion à une connexion des paires de commutateurs (T₁, T₂ ; T₃, T₄ ; T₅, T₆ ; ...) ,
• une première diode (D_{High}) par laquelle le condensateur tampon (C_{Buff}) est relié à l'autre connexion des paires de commutateurs (T₁, T₂ ; T₃, T₄ ; T₅, T₆ ; ...) ,
• des diodes supplémentaires (D_{Low1}, D_{Low2}, D_{Low3}, ...) qui sont disposées dans le sens inverse entre le nœud entre le condensateur tampon (C_{Buff}) et la première diode et les connexions pour les phases respectives (M₁, M₂, M₃) de la charge (M), et
• un convertisseur abaisseur (T_{S}) par lequel le condensateur tampon (C_{Buff}) est relié au condensateur de circuit intermédiaire (C_{ZK}).

2. Circuit onduleur selon la revendication 1, dans lequel les diodes (D_{High} et D_{Low1}, D_{Low2}, D_{Low3} ; ...) et le condensateur tampon (C_{Buff}) sont reliés sous faible inductance à la paire de commutateurs (T₁, T₂ ; T₃, T₄ ; T₅, T₆ ; ...) .

3. Circuit onduleur selon la revendication 2, dans lequel les diodes supplémentaires (D_{Low1}, D_{Low2}, D_{Low3} ; ...) dans le module de puissance (1) sont intégrées au niveau de la paire de commutateurs associée (T₁, T₂ ; T₃, T₄ ; T₅, T₆ ; ...) et constituent avec celle-ci respectivement un module partiel.

4. Circuit onduleur selon la revendication 2 ou 3, dans lequel les diodes (D_{High} et D_{Low1}, D_{Low2}, D_{Low3} ; ...) sont intégrées dans le module de puissance (1).

5. Circuit onduleur selon la revendication 2 ou 3, dans lequel les diodes (D_{High} et D_{Low1}, D_{Low2}, D_{Low3} ; ...) et le condensateur tampon (C_{Buff}) sont intégrés dans le module de puissance (1).

6. Circuit onduleur selon l'une quelconque des revendications 1 à 5, présentant un condensateur d'amortissement (C_{SNB}) qui est connecté en parallèle aux paires de commutateurs (T₁, T₂ ; T₃, T₄ ; T₅, T₆ ; ...) et est connecté à celles-ci sous faible inductance.

7. Circuit onduleur selon la revendication 6, dans lequel le condensateur d'amortissement (C_{SNB}) est intégré dans le module de puissance (1).

8. Circuit onduleur selon l'une quelconque des revendications 1 à 7, dans lequel la source de tension continue (U_{B}) est un accumulateur pour l'entraînement d'un véhicule électrique.

9. Circuit onduleur selon l'une quelconque des revendications 1 à 8, dans lequel la charge (M) est un moteur électrique triphasé dont les enroulements sont interconnectés en étoile.

10. Circuit onduleur selon l'une quelconque des revendications 1 à 8, dans lequel la charge (M) est un moteur électrique triphasé dont les enroulements sont interconnectés en triangle.
